# EUROPÄISCHE PATENTSCHRIFT

(11) **EP 2 044 336 B1**
(45) Veröffentlichungstag und Bekanntmachung des Hinweises auf die Patenterteilung: **06.04.2016**
(21) Anmeldenummer: 07786328.0
(22) Anmeldetag: 25.07.2007
(51) Int. Cl.: F15B 15/26

(54) **STEUERUNGSSYSTEM FÜR EIN HYDRAULISCHES ELEMENT**
CONTROL SYSTEM FOR A HYDRAULIC ELEMENT
SYSTÈME DE COMMANDE POUR UN ÉLÉMENT HYDRAULIQUE

(30) Priorität: 25.07.2006 DE 102006034867; 25.07.2006 DE 102006034864; 08.12.2006 DE 102006058271; 15.01.2007 DE 102007002866; 08.02.2007 DE 102007007054
(43) Veröffentlichungstag der Anmeldung: 08.04.2009
(73) Patentinhaber: Tretsch, Adolf, 78333 Stockach (DE)
(72) Erfinder: TRETSCH, Adolf, 78333 Stockach (DE)
(74) Vertreter: Fugmann, Winfried
(86) Internationale Anmeldenummer: PCT/EP2007/006604
(87) Internationale Veröffentlichungsnummer: WO 2008/012082

(56) Entgegenhaltungen:
- EP-A- 0 473 030
- EP-A- 1 106 841
- EP-A- 1 538 344
- DE-A1- 4 141 460
- DE-B- 1 114 684
- US-A- 4 589 393
- US-A- 4 830 046
- US-A- 5 381 654
- US-A- 5 511 528

## Beschreibung

Die Erfindung betrifft ein Steuerungssystem für ein hydraulisches Element, welches unter dem Druck von Druckfluid in einem Verriegelungsdruckraum einerseits des hydraulischen Elements in einen Entriegelungsruckraum andererseits des hydraulischen Elements einfährt, wobei beide Druckräume über je eine Leitung an die gleiche Hauptleitung angeschlossen sind.

### Stand der Technik

Steuerungssysteme für hydraulische Elemente gibt es eine Vielzahl. Nur beispielsweise wird auf Arbeitszylinder verwiesen, die in einer bestimmten Position verriegelbar sein sollen. Beispielsweise wird in der DE 41 41 460 C2 ein druckmittelbetriebener Arbeitszylinder gezeigt, bei dem eine drehbare Spindel in ein Kolbenstangenrohr eingreift. Wird der entsprechende Kolben, der dem Kolbenstangenrohr zugeordnet ist, unter Druck gesetzt, dreht auch die Spindel, sodass das Kolbenstangenrohr sich axial bewegen kann.

Bei all diesen Arbeitszylindern stellt sich das Problem, dass, sollte der Druck in dem eigentlichen Hauptdruckraum, in dem der Kolben mit Druck beaufschlagt wird, zusammenbrechen, beispielsweise durch Brechen von Dichtmanschetten, der Kolben unter dem Druck der Last oder auch unter einem Zug selbstständig in Bewegung gesetzt wird, wobei die Spindel mit ihrem Aussengewinde das Innengewinde des Kolbenstangenrohrs abläuft. Um dies zu verhindern, wird daran gedacht, den Arbeitszylinder zu verriegeln, d. h., die Bewegung des Kolbens zu stoppen. Nach der EP 1 538 344 A2 geschieht dies dadurch, dass ein unter Federkraft einer Feder stehender Verriegelungskörper in eine Verriegelungsbohrung in der Spindel eingreift und so die Drehung der Spindel unterbrochen wird. Soll eine Entriegelung stattfinden, wird der Verriegelungskörper mit Hilfe eines fluiden Arbeitsmittels entgegen der Federkraft der Feder von der Verriegelungsstellung in eine Entriegelungsstellung übergeführt, in welcher die Spindel um ihre Drehachse drehbar ist. Das Problem bei dieser Anordnung ist jedoch die Steuerung der Druckmittelzufuhr zu den Druckkammern und der Entriegelungsdruckkammer. Ferner wird die Steuerung äusserst problematisch, wenn Störungen im Fluidzufuhr- bzw. -abfuhrsystem auftreten.

Diese Probleme gelten aber nicht nur für verriegelbare Arbeitszylinder sondern für alle hydraulischen Systeme, in denen ein hydraulisches Element zwischen zwei Druckräumen bewegt werden kann, aber bei einer Störung od.dgl. gesichert in einen der Druckräume eintaucht, wobei beide Druckräume mit der gleichen Hauptleitung verbunden sind.

Aus EP 1 106 841 A2 ist ein Linearverstellantrieb bekannt, bei dem eine rohrförmige Kolbenstange eine drehbar gelagerte Gewindespindel umfasst, die mit einer schaltbaren Sperranordnung zur Blockierung der Drehbewegung zusammenwirkt. Ein Sperrkolben ragt in Sperrstellung mit einem Sperrfortsatz in eine mit der Gewindespindel drehfest verbundene Sperraufnahme. Durch die Kraft einer Federanordnung wird der Sperrkolben in Richtung der Sperraufnahme verstellt, wobei ein Abströmen des aus einem Druckraum des Sperrkolbens zu verdrängenden Druckmediums durch eine den Sperrkolben durchsetzende Drosselbohrung ermöglicht wird. Zur Zu- und Abfuhr des Druckmediums zur und von der Bohrung des Sperrkolbens sind federbelastete Rückschlagventile in gegengleicher Anordnung vorgesehen.

### Aufgabe

Aufgabe der vorliegenden Erfindung ist es, eine Steuerung der o. g. Art zu entwickeln, die "mitdenkend" die Entriegelung und Verriegelung des hydraulischen Elements vornimmt.

### Lösung der Aufgabe

Gemäß einer Ausführungsform der Erfindung ist in die Leitung zum Entriegelungsdruckraum ein Druckregelventil eingeschaltet, das ein Rückströmen des Fluid aus dem Entriegelungsdruckraum verhindert.

Das Druckregelventil garantiert, dass bei einem geschlossenem Hauptventil der Druck in der Leitung zum Entriegelungsdruckraum immer um ein gewünschtes Mass (beispielsweise 2 bar) niedriger ist, als der Druck in der Leitung zum Verriegelungsdruckraum

Wenn in der vorliegenden Anmeldung von Druckregelventil gesprochen wird, so ist damit jedes Element umfasst, welches ein Rückströmen des Fluids unterbindet. Ebenso kann das oben erwähnte hydraulische Element eine beliebige Form und Ausgestaltung aufweisen.

Bei dem erfindungsgemässen Steuerungssystem ist in die Leitung zu dem Verriegelungsdruckraum ein Druckausgleichsventil eingeschaltet. Dieses ist in einem hydraulischen Systemen vorgesehen, welches sowohl mit als auch ohne ein Druckregelventil arbeitet. Dieses Druckausgleichsventil wirkt vor allem Störungen entgegen. Zu diesem Zweck ist es besonders ausgestaltet. In einer axialen Stufenbohrung des Druckausgleichsventils befindet sich einmal ein Gleitkolben, der mit dem Fluidzufuhrsystem in Verbindung steht. Gemäß einer nicht beanspruchten Ausführungsform ist hierzu in den Gleitkolben eine T-Leitung eingeformt, die radial gegen die Innenfläche der Stufenbohrung hin ausmündet und zwar bevorzugt in einen Ringkanal. Im Anschluss an den Ringkanal liegt der Gleitkolben nicht mehr eng an der Innenfläche der Stufenbohrung an, sondern es ist dort ein Ringspalt ausgebildet, durch den Druckfluid in eine Durchflusskammer und weiter in eine Leitung zum Verriegelungsdruckraum hinter dem hydraulischen Element fliessen kann.

Des Weiteren drückt der Gleitkolben auf eine Kugel, die unter dem Druck einer Feder steht. Der Gleitkolben kann die Kugel in einen Kugelsitz eindrücken, in dem die Kugel automatisch nivelliert wird. Hierdurch wird der Fluss von Druckmedium durch die Leitung zum Verriegelungsdruckraum hinter dem hydraulischen Element hin unterbrochen bzw. der Druck in dem Verriegelungsdruckraum wird gehalten, so dass eine Entriegelung des hydraulischen Elements gesichert verhindert wird.

Erfindungsgemäß ist der Gleitkolben als Blendkolben ausgebildet. Ebenso wie der oben beschriebene Gleitkolben gleitet auch er in der Stufenbohrung, allerdings besitzt er im Inneren eine Blende, durch welche die Durchflussöffnung wesentlich verringert ist. Dadurch ist der Durchfluss unabhängig von einer Temperatur- oder Viskositätsänderung des Druckmediums. Der Blendkolben wirkt aber in gleicher Weise mit der Kugel zusammen, wobei er zur Kugel hin eine Ringkante ausbildet, in die Einformungen eingeformt sind, so dass Druckmedium zwischen Kugel und Blendkolben hindurch in die nachfolgende Leitung gelangen kann.

Das erfindungsgemässe Druckregeiventil vor dem Entriegelungsdruckraum des hydraulischen Elements ist so ausgelegt, dass es bei einem Aufbau eines Fluiddruckes in dem Fluidsystem Druckmedium zum Entriegelungsdruckraum durchlässt, bevor weitere Druckräume, die aus der Hauptleitung gespeist werden, mit Druck beaufschlagt werden. Hierzu hat es sich als günstig erwiesen, dass das Druckregelventil einstellbar ist. Ferner wird vor den weiteren Druckraum ein Lasthalteventil eingeschaltet und diesem in einem Bypass ein Rückschlagventil zugeordnet, welches in jedem Fall höher ausgelegt ist, als das Druckregelventil vor dem Entriegelungsdruckraum. Das bedeutet, dass bis zu einer gewissen Höhe des Druckes im Fluidzufuhrsystem nur Druckfluid zum Entriegelungsdruckraum strömt, was bewirkt, dass das hydraulische Element zuerst bewegt wird. Erst wenn ein bestimmter Wert an Druck im Fluidsystem überschritten wird, erfolgt auch ein Einströmen von Druckfluid über das Rückschlagventil im Bypass des Lasthalteventils in den Druckraum.

Fliesst bei einer Leckage des Lasthalteventils oder des dem Lasthalteventil im Bypass zugeordneten Rückschlagventils Druckmedium zurück aus der Druckkammer, so kann es zum Einen, sofern sonst das System gesperrt ist, durch das Druckregeiventil in den Entriegelungsdruckraum vor dem hydraulischen Element fliessen, zum Anderen aber auch durch das Druckausgleichsventil und den Ringraum in den Verriegelungsdruckraum hinter dem hydraulischen Element. Der Druck im Verriegelungsdruckraum hinter dem hydraulischen Element ist bei geschlossenem Hauptventil mindestens um 2 bar höher als der Druck im Entriegelungsdruckraum vor dem hydraulischen Element. Da sich in dem Verriegelungsdruckraum zusätzlich eine Feder befindet, die sich gegen das hydraulische Element abstützt, wird das hydraulische Element immer in Verriegelungslage gehalten.

Fällt dagegen beispielsweise das Lasthalteventil oder auch das ihm zugeordnete Rückschlagventil gänzlich aus, so kann es vorkommen, dass ein Druckanstieg in der Rückflussleitung schlagartig erfolgt. Dabei schliesst das Druckausgleichsventil ebenfalls schlagartig, da die Menge des Druckfluids durch die T-Leitung den Gleitkolben infolge des sehr geringen Ringspalts nach unten drückt und die Kugel in ihren Kugelsitz einpresst. Dies hat eine Pumpwirkung von Druckfluid in den Verriegelungsdruckraum hinter dem hydraulischen Element zur Folge, so dass auch ein Anstieg eines Druckes im Entriegelungsdruckraum vor dem hydraulischen Element nicht dazu führt, dass das hydraulische Element aus seiner Riegellage geführt wird. Der Druck im Verriegelungsdruckraum hinter dem hydraulischen Element ist bei geschlossenem Hauptventil um mindestens 2 bar höher als der Druck im Entriegelungsdruckraum vor dem hydraulischen Element.

Sollten mehrere Druckräume vorgesehen sein, ist bevorzugt selbstverständlich für jeden Druckraum ein eigenes Lasthalteventil mit einem Rückschlagventil im Bypass vorgesehen, wobei die Systeme durch Wechselventile miteinander verbunden sind, von dem auch die Leitung zum Entriegelungsdruckraum vor dem hydraulischen Element abzweigt, in die das einstellbare Druckregelventil eingesetzt ist. In diesem Fall sind natürlich die Steuerungen der Lasthalteventile immer auch mit der jeweiligen Hauptleitung verbunden, die zu dem jeweils anderen Lasthalteventil führt, damit das jeweils andere Lasthalteventil geöffnet wird, um einen Rückfluss von Druckmedium aus dem nicht mit Druckmedium beaufschlagten Druckraum zu ermöglichen.

Das Druckausgleichsventil bietet sich vor allem dann an, wenn als Hauptventil für die Versorgung des gesamten Fluidzufuhrsystems ein sperrbares Ventil vorgesehen ist. Denkbar ist aber auch die Anordnung eines den Rückfluss von Druckmedium gleichzeitig aus beiden Leitungen zulassendes Ventil, so dass ein Druckausgleich durch dieses Ventil bei leichten Leckagen stattfinden kann, ohne dass das oben erwähnte Druckausgleichsventil betätigt wird. In jedem Fall sollte dennoch auch dort das Druckausgleichsventil vorgesehen werden, da es bei einem schlagartigen Ansteigen des Druckes im System in jedem Fall den Verriegelungsdruckraum hinter dem hydraulischen Element bei geschlossenem Hauptventil mit dem um 2 bar höheren Druck versorgt als den Entriegelungsraum vor dem hydraulischen Element, so dass in jedem Fall ein Entriegeln des hydraulischen Elements unmöglich wird.

Bei einem weiteren Ausführungsbeispiel eines erfindungsgemässen hydraulischen Systems wird das Druckregelventil in der Leitung zu dem Druckraum vor dem Sperrbolzen weggelassen. Wichtig bleibt aber das Druckausgleichsventil. Ferner wird die Ansprechbarkeit der Rückschlagventile um die Lasthalteventile herum wesentlich, fast auf Null, vermindert und zusätzliche Blenden in die Hauptleitungen eingebaut. Hierdurch entsteht ein System, welches unabhängig von einer Änderung der Temperatur oder Viskosität des Druckmediums wird und welches Gewähr leistet, dass der Kolben des verriegelbaren Arbeitszylinders zwischen zwei Druckpolstern in den entsprechenden Druckräumen geführt wird. Ein weiterer wesentlicher Vorteil liegt darin, dass durch den Wegfall der Druckbegrenzung der Rückschlagventile um die Lasthalteventile herum der Arbeitszylinder wesentlich höhere Lasten bewältigen kann.

Wird ein Druck in der jeweiligen Hauptleitung aufgebaut, so fliesst Druckmedium in den entsprechenden Druckraum des Arbeitszylinders. Der Kolben des Arbeitszylinders kann sich allerdings nicht bewegen, da das jeweils andere Lasthalteventil gesperrt ist. Das bedeutet, dass sich sowohl in der Zuleitung zu dem Druckraum des Arbeitszylinder als auch in der Zuleitung zu dem Druckraum vor dem Sperrbolzen ein wesentlich erhöhter Druck aufbaut, der zu einem Schliessen des Druckausgleichsventils führt. Danach braucht der Druck in dem Druckraum vor dem Sperrbolzen nur weiter erhöht zu werden, bis die Kraft der Schraubenfeder hinter dem Sperrbolzen überwunden wird. Ein entsprechend vorhandenes Druckmedium wird über Rückschlagventile weggedrückt.

Jetzt entriegelt der Sperrbolzen. Wird nun der Druck weiter erhöht, erfolgt ein Ansprechen des anderen Lasthalteventils, sodass sich der Druckraum, der bislang geschlossen war, entleeren kann. Erst jetzt kann sich auch der Kolben des Arbeitszylinders bewegen.

Tritt eine Störung auf, so wird durch das erfindungsgemässe Druckausgleichsventil und die angeordneten Blenden Gewähr geleistet, dass der Sperrbolzen immer, wie gewünscht, arbeitet.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine blockschaltbildliche Darstellung eines Steuerungssystems für einen schematisch im Längsschnitt dargestellten verriegelbaren Arbeitszylinder;
Figur 2 eine blockschaltbildliche Darstellung eines weiteren Hauptventils zur Verwendung bei dem Steuerungssystem gem. Figur 1;
Figur 3 einen vergrössert dargestellten Querschnitt aus einem Steuerungsblock im Bereich eines Druckausgleichsventils;
Figur 4 einen vergrösserten Querschnitt durch einen Blendkolben;
Figur 5 eine blockschaltbildliche Darstellung eines weiteren Ausführungsbeispiels eines Steuerungssystems für einen schematisch im Längsschnitt dargestellten verriegelbaren Arbeitszylinder.

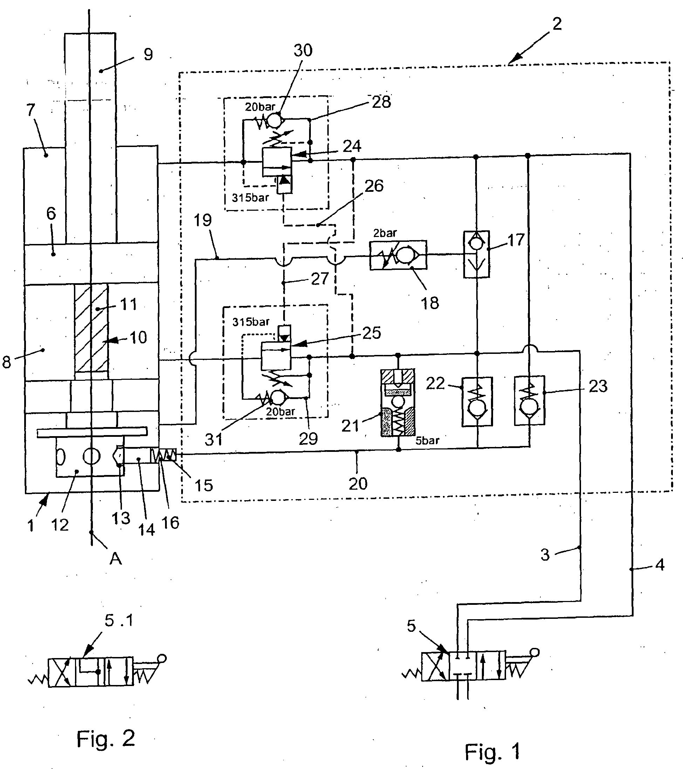

Gem. Figur 1 ist einem verriegelbaren Arbeitszylinder 1 ein strichpunktiert dargestellter Steuerungsblock 2 zugeordnet. Hauptleitungen 3 und 4 führen von dem Steuerungsblock 2 zu einem Hauptventil 5, das mit einer nicht näher gezeigten Druckquelle für ein Fluid verbunden ist. Als Druckquelle kommt sowohl ein Gas als auch eine Flüssigkeit, insbesondere Hydraulikflüssigkeit, in Betracht.

Zur näheren Erläuterung des verriegelbaren Arbeitszylinders wird insbesondere auf die P 10 2005 015 059.4 verwiesen. In diesem Arbeitszylinder 1 befindet sich ein gleitbarer Kolben 6 zwischen zwei Druckräumen 7 und 8. An diesen Kolben 6 schliesst eine Kolbenstange 9 an, die nach aussen führt. In dem Kolben 6 sitzt eine Spindel 10, deren Aussengewinde 11 mit einem entsprechenden Innengewinde in der Spindel 6 bzw. der Kolbenstange 9 zusammenwirkt, so dass diese Spindel 10 um ihre Längsachse A gedreht wird. Dabei nimmt die Spindel 10 eine Teilscheibe 12 mit, welche eine Mehrzahl von radial angeordneten Entriegelungsdruckräumen 13 aufweist. In diesen Entriegelungsdruckräume 13 kann ein (oder mehrere) Sperrbolzen 14 einfahren, der radial geführt ist und unter dem Druck einer Schraubenfeder 15 steht, wobei diese Schraubenfeder 15 in einem Verriegelungsdruckraum 16 hinter dem Sperrbolzen 14 angeordnet ist.

Die oben erwähnte Hauptleitung 4 führt von dem Hauptventil 5 zu dem Druckraum 7, so dass bei Befüllung des Druckraumes 7 die Kolbenstange 9 eingezogen wird. Die Hauptleitung 3 führt von dem Hauptventil 5 zu dem Druckraum 8, so dass bei Befüllen des Druckraumes 8 die Kolbenstange 9 ausgestossen bzw. ausgedrückt wird.

Des Weiteren stehen beide Hauptleitungen 3 und 4 über ein Wechselventil 17 und über ein einstellbares Druckregelventil 18 in einer Leitung 19 in Verbindung.

Der Verriegelungsdruckraum 16 ist über eine weitere Leitung 20 zum Einen über ein Druckausgleichsventil 21 mit der Hauptleitung 3 und zum Anderen über jeweils ein Rückschlagventil 22 und 23 mit der Hauptleitung 3 bzw. der Hauptleitung 4 verbunden.

Sowohl in die Hauptleitung 3 als auch in die Hauptleitung 4 ist vor dem Anschluss an die entsprechenden Druckräume 7 bzw. 8 ein Lasthalteventil 24 bzw. 25 eingeschaltet. Jedes Lasthalteventil 24 bzw. 25 ist einstellbar und über eine jeweils gestrichelte Leitung 26 bzw. 27 mit der Hauptleitung 3 bzw. 4 vor dem jeweils anderen Lasthalteventil 25 bzw. 24 verbunden. Ferner besitzt jedes Lasthalteventil 24 bzw. 25 einen Bypass 28 bzw. 29, in den ein Rückschlagventil 30 bzw. 31 eingeschaltet ist.

Ein derartiges Steuerungssystem lässt folgende Möglichkeiten und Funktionen zu, wobei das Zusammenspiel von Arbeitszylinder und Steuerungssystem als "denkender Zylinder" bezeichnet werden kann:

### Normalbetrieb

Verständlich ist, dass vor einer Bewegung des Kolbens 6 dieser entriegelt werden muss, was bedeutet, dass der Sperrbolzen 14 den Entriegelungsdruckraum verlassen muss. Wie weiss nun der Zylinder, dass dies vor einem Druckaufbau in den Druckräumen 7 oder 8 geschehen muss, ohne dass ein spezieller Sensor diesen Sperrbolzen 14 beobachtet?

Zu diesem Zweck sind die Rückschlagventile 30 und 31 auf das einstellbare Druckregelventil 18 abgestimmt. Soll beispielsweise, wie in Figur 1 gezeigt, der Druckraum 8 mit einem Druckfluid gefüllt werden, was bedeutet, dass der Arbeitszylinder drückend wirkt, so befindet sich das Wechselventil 17 in der gezeigten Stellung und das Druckfluid kann über das auf 2 bar eingestellte Druckregelventil 18 und die Leitung 19 in den Entriegelungsdruckraum 13 fliessen, bis dort ein Druck von 20 bar erreicht wird, bei dem aber der Sperrbolzen 14 längst aus dem Entriegelungsdruckraum 13 herausgedrückt ist. Erst wenn sich in dem System der Druck von 20 bar aufgebaut hat, kann das Rückschlagventil 31 im Bypass 29 des Lasthalteventils 25 überwunden und damit der Druckraum 8 gefüllt werden.

Soll dagegen der Druckraum 7 gefüllt und damit der Arbeitszylinder ziehend gemacht werden, so erfolgt eine Zufuhr von Druckfluid durch Verschieben des Hauptventils 5 nach rechts in die Hauptleitung 4. Dadurch schaltet das Wechselventil 17 um, so dass jetzt der Zugang zu der Hauptleitung 3 gesperrt ist. Dagegen steht die Hauptleitung 4 über das einstellbare Druckregeiventil 18 mit dem Entriegelungsdruckraum 13 vor dem Sperrbolzen 14 in Verbindung. Ferner ist über die Leitung 27 dem Lasthalteventil 25 signalisiert, dass es öffnet, damit Druckfluid aus dem Druckraum 8 über die Hauptleitung 3 und das Hauptventil 5 entweichen kann.

Auch jetzt fliesst zuerst Druckfluid über das einstellbare Druckregelventil 18, da das Rückschlagventil 30 in dem Bypass 28 des Lasthalteventils 24 erst öffnet, wenn im System ein Druck von 20 bar aufgebaut ist. Bei 20 bar ist aber auch hier der Sperrbolzen 14 entriegelt.

Zum Verriegeln wird das Hauptventil 5 in die Mittelstellung geschaltet, in der die beiden Hauptleitungen 3 bzw. 4 drucklos sind. Unter dem Druck der Schraubenfeder 15 wird der Sperrbolzen 14 in den Entriegelungsdruckraum 13 eingedrückt. Hierdurch wird ein Drehen der Spindel 10 unterbunden, so dass der Kolben 6 in dieser Lage gesichert bleibt.

### Störungen

Störungen sind nur dann beachtlich, wenn sie zu einem unbeabsichtigten Entriegeln des Sperrbolzens 14 führen würden. Dies wäre beispielsweise dann der Fall, wenn am Lasthalteventil 24 bzw. 25 und insbesondere beim Rückschlagventil 30 bzw. 31 ein Fehler auftreten würde, beispielsweise wenn die Ventile klemmen oder die Federn brechen. In diesem Fall könnte sich in dem jeweiligen System ein Druck aufbauen, wobei Druckfluid über das einstellbare Druckregelventil 18 in den Entriegelungsdruckraum 13 fliesst und den Sperrbolzen 14 entriegeln würde. Dies kann einmal dadurch verhindert werden, dass ein Hauptventil 5 gewählt wird, wie es in Figur 2 dargestellt ist. Bei diesem Hauptventil sind in der Mittelstellung die Hauptleitungen 3 und 4 nicht gesperrt, sondern für einen Rückfluss offen. Das bedeutet, dass im gesamten System klein Drück aufgebaut werden kann, der zu einer Entriegelung des Sperrbolzens 14 führt.

In vielen Fällen ist es jedoch wünschenswert, das auch anderweitig einzusetzende Hauptventil 5 gem. Figur 1 zu verwenden. In diesem Fall ist der Einsatz des erfindungsgemässen Druckausgleichsventils 21 besonders wünschenswert. Für dieses Druckausgleichsventil 21 ist in dem Steuerblock 2 zwischen der Hauptleitung 3 und der Leitung 20 eine Bohrung 32 vorgesehen, in der sich ein Einsatz 33 befindet. Diesen Einsatz 33 durchzieht eine Stufenbohrung 34, in die ein Kugelsitz 35 für eine Kugel 36 eingeformt ist. Die Kugel 36 stützt sich gegen eine Schraubenfeder 37 ab, so dass sie von dem Kugelsitz 35 abgehoben ist.

Andererseits drückt auf die Kugel 36 ein Gleitkolben 38, der von einer T-Leitung 39 durchsetzt ist, die mit der Hauptleitung 3 in Verbindung steht. Die T-Leitung 39 mündet in einen Ringkanal 40 aus, der über einen Ringspalt 41 mit einer Durchflusskammer 42 in Verbindung steht. Zur Bildung des Ringspalts 41 hält der Gleitkolben 38 in diesem Bereich von einer Innenfläche 43 der Stufenbohrung 34 einen geringen Abstand ein. Die Spannung der Schraubenfeder 37 ist so eingestellt, dass das Druckausgleichsventil 21 bei einem Druck von 5 bar in der Hauptleitung schliesst. Dabei hat das Zusammenwirken von Kugel 36 mit Kugelsitz 35 den besonderen Vorteil einer erhöhten Genauigkeit gegenüber einem Kegelventil, da die Kugel, die von dem Gleitkolben 38 geschoben wird, sich in den Kugelsitz 35 selbst nivellieren kann, so dass mögliche Ungenauigkeiten ausgeglichen werden.

Fällt nun das Lasthalteventil 25 bzw. das Rückschlagventil 31 aus, so fliesst bei einer langsamen Leckage Druckfluid durch die T-Leitung 39, den Ringkanal 40 und den Ringspalt 41 auch an der Kugel 36 vorbei in die Leitung 20 und in den Verriegelungsdruckraum 16. Selbst wenn die Leckage einen Druck von 2 bar übersteigen sollte, findet dort ein Druckausgleich mit 2 bar Druckunterschied in dem System zwischen Entriegelungsdruckraum 13, Leitung 19, Druckregelventil 18, Hauptleitung 3, Druckausgleichsventil 21, Leitung 20 und Verriegelungsdruckraum 16 statt. In diesem Fall überwiegt die Kraft der Schraubenfeder 15 und die Kraft des um 2 bar höheren Druckes und hält den Sperrbolzen 14 in Riegellage.

Sollte das Lasthalteventil 25 bzw. das Rückschlagventil 31 völlig ausfallen, so könnte ein Druck auch schlagartig erhöht werden, der dann das Druckregelventil 18 überwindet, wobei jedoch nicht genügend Druckfluid durch das Druckausgleichsventil 21 gefördert wird, um ein Gleichgewicht herzustellen. In diesem Fall bewirkt aber der schlagartige Druckanstieg ein Verschieben des Gleitkolbens 38 nach unten, so dass die Kugel 36 auf den Sitz 35 gepresst wird und eine Pumpwirkung von Druckfluid durch die Leitung 20 in den Verriegelungsdruckraum 16 stattfindet. Diese Pumpwirkung überwindet in jedem Fall den Druck des Druckfluids durch das Druckregelventil 18 und die Leitung 19 in den Entriegelungsdruckraum 13, so dass der Sperrbolzen 14 in Riegellage verbleibt.

Als weitere Störung wäre denkbar, dass die Schraubenfeder 15 vor dem Sperrbolzen 14 bricht. Auch in diesem Fall steht im Verriegelungsdruckraum 16 der volle Systemdruck an, da ein Durchfluss durch das Druckausgleichsventil 21 nicht gehindert wird. Dagegen bewirkt das Druckregelventil 18 in der Leitung 19 einen Druckverlust von 2 bar, so dass in dem Entriegelungsdruckraum 13 ein um 2 bar verminderter Systemdruck ansteht. Der Sperrbolzen 14 bleibt somit in Verriegelungslage oder wird bei gebrochener Schraubenfeder und geschlossenem Hauptventil durch den um 2 bar höheren Druck im Verriegelungsdruckraum 16 in die Verriegelungsposition gedrückt.

Es ist natürlich auch denkbar, dass ein zweites Druckausgleichsventil dem Lasthalteventil 24 zugeordnet ist, wenn der Zylinder drückend und ziehend eingesetzt wird.

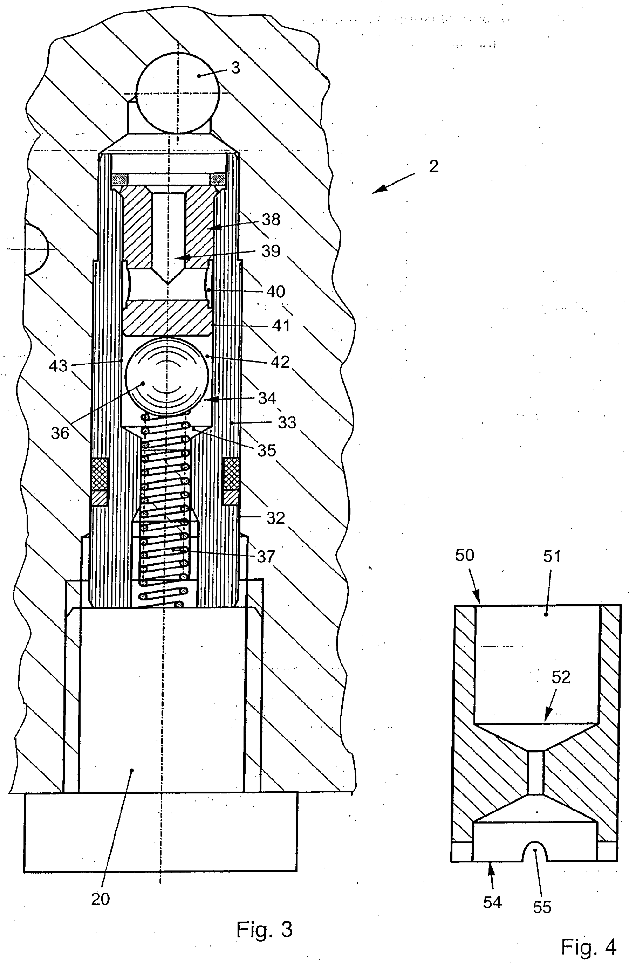

Bei einem Ausführungsbeispiel der Erfindung gemäss Figur 4 ist der Gleitkolben als Blendkolben 50 ausgebildet. Das bedeutet, dass er der Innenfläche 43 des Ringkanals 40 relativ abdichtend anliegt, jedoch in diesem Ringkanal gleitet.

Dieser Blendkolben 50 besitzt eine Durchgangsbohrung 51, in die eine Blende 52 eingesetzt ist. Die Blende 52 ist vor allem dadurch gekennzeichnet, dass sie sich definiert zu einer sehr verringerten Durchlassöffnung 53 verjüngt. In der Hydraulik ist bekannt, das derartige Blenden, vor allem, wenn die Durchlassöffnung so kurz wie möglich ist, den Vorteil haben, dass der Durchfluss von beispielsweise Öl relativ unabhängig von der Temperatur oder der Viskosität des Durchflussmediums ist.

Eine untere Ringkante 54, die mit der Kugel 36 zusammenwirkt, ist von Einformungen 55 unterbrochen, die Gewähr leisten, dass ein Durchflussmedium in die Stufenbohrung 34 und an der Schraubenfeder 37 vorbei in die Leitung 20 gelangen kann.

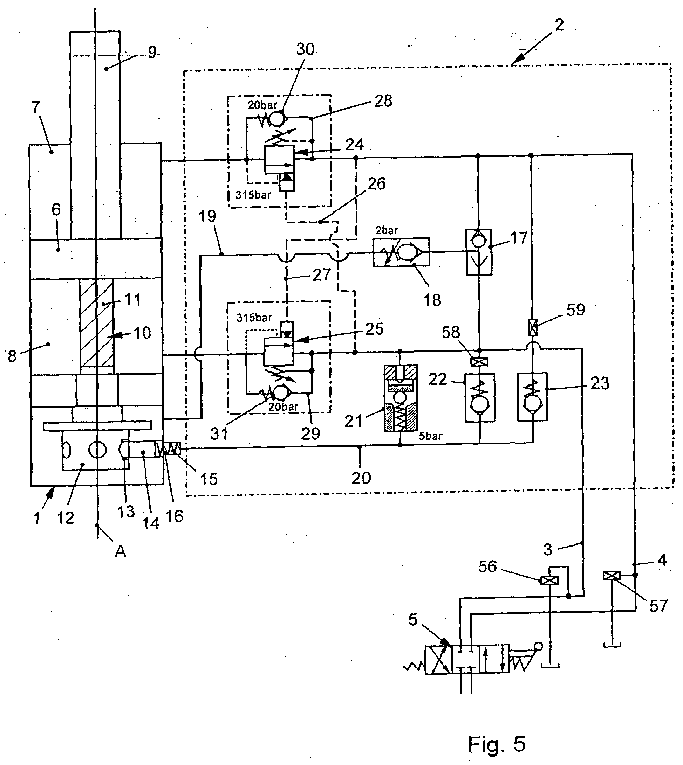

Ein mit diesem Blendkolben 50 versehenes Druckausgleichsventil 21 wird vor allem in ein hydraulische System eingesetzt, wie es in Figur 5 gezeigt ist. In diesem hydraulische System fehlt das Druckregelventil 18, dafür befinden sich in den Hauptleitung 3 und 4 zwei Blenden 56 und 57, die auch in dem Hauptventil 5 integriert sein könnten. Zwei weitere Blenden 58 und 59 sind dem Wechselventil 17 vor - und dem Rückschlagventil 23 nachgeschaltet.

Die Funktionsweise dieses hydraulischen Systems ist folgende:

### Normalbetrieb

Die Rückschlagventile 30 und 31 sind jetzt so eingestellt, dass sie schon bei sehr geringem Druck, nämlich ca. 0,5 bar öffnen. Soll beispielsweise der Druckraum 8 mit einem Druckfluid gefüllt werden, was bedeutet, dass der Arbeitszylinder drückend wirkt, so befindet sich das Wechselventil 17 in der gezeigten Stellung und das Druckfluid kann über die Hauptleitung 3 und über das Rückschlagventil 31 in den Druckraum 8 gelangen. Der Kolben 6 bewegt sich jedoch nicht, da die Spindel 10 nicht entriegelt ist. Somit baut sich ein Druck in der Hauptleitung 3 auf, der bei ca. 30 bar dazu führt, dass das Druckausgleichsventil 21 schliesst.

Über die Leitung 19 fliesst Druckmedium in den Entriegelungsdruckraum 13, bis dort ein Druck von ca. 50 bar erreicht wird, bei dem der Sperrbolzen gegen die Kraft der Schraubenfeder 15, die sehr hart eingestellt werden kann, aus dem Entriegelungsdruckraum 13 herausgedrückt wird.

Noch kann sich der Kolben 6 aber nicht bewegen, da sich das Lasthalteventil 24 in Sperrstellung befindet. Erst wenn sich in dem System ein Druck von ca. 100 bar aufgebaut hat, wird über die Leitung 26 das Lasthalteventil 24 angesteuert und entsperrt, sodass Druckmedium aus dem Druckraum 7 durch die Hauptleitung 4 und das Hauptventil 5 zurückfliessen kann.

Bei diesem bevorzugten hydraulischen System ist erkennbar, dass der Kolben 6 ganz bewusst und definiert zwischen den beiden hydraulischen Druckpolstern in dem Druckräumen 8 und 7 geführt wird. Zwischen diesen Druckpolstern ist der Kolben 6 immer eingespannt.

Soll dagegen der Druckraum 7 gefüllt und damit der Arbeitszylinder ziehend gemacht werden, so erfolgt eine Zufuhr von Druckfluid durch Verschieben des Hauptventils 5 nach rechts in die Hauptleitung 4. Dadurch schaltet das Wechselventil 17 um, so dass jetzt der Zugang zu der Hauptleitung 3 gesperrt ist. Dagegen steht die Hauptleitung 4 über die Leitung 19 mit dem Entriegelungsdruckraum 13 vor dem Sperrbolzen 14 in Verbindung. Sobald der Druck auch hier ca. 50 bar überschreitet, wird der Sperrbolzen 14 gegen die Kraft der Schraubenfeder 15 entriegelt. Allerdings kann sich auch jetzt der Kolben 6 erst dann bewegen, wenn in der Leitung 27 zum Lasthalteventil 25 hin ein Druck von ca. 100 bar aufgebaut und damit das Lasthalteventil 25 auf Durchfluss geschaltet ist. Damit kann Druckfluid aus dem Druckraum 8 über die Hauptleitung 3 und das Hauptventil 5 entweichen, was es dem Kolben ermöglicht, sich zu bewegen.

Zum Verriegeln des Sperrbolzens 14 sowohl beim Ziehen wie auch beim Drücken wird das Hauptventil 5 auf Durchlass bzw. Mittelstellung geschaltet, wobei die beiden Hauptleitungen 3 bzw. 4 drucklos sind und das Druckmedium über die Blenden 56 bzw. 57 in jeweils einen Tank abfliessen kann. Unter dem Druck der Schraubenfeder 15 wird der Sperrbolzen 14 in den Entriegelungsdruckraum 13 eingedrückt, was sehr schnell geschieht. Hierdurch wird ein Drehen der Spindel 10 unterbunden, so dass der Kolben 6 in dieser Lage gesichert bleibt.

### Störungen

Fällt das Lasthalteventil 24 (25) bzw. das Rückschlagventil (30) 31 aus, so findet bei einer langsamen Leckage infolge des Druckausgleichsventils 21 ein Druckausgleich in den Leitungen 19, 20 und 3 statt. In diesem Fall überwiegt die Kraft der Schraubenfeder 15, wodurch der Sperrbolzen 14 in seine Riegellage gebracht wird.

Sollte das Lasthalteventil 25 bzw. das Rückschlagventil 31 völlig ausfallen, so könnte ein Druck auch schlagartig erhöht werden. In diesem Fall bewirkt der schlagartige Druckanstieg auf über 30 bar ein Verschieben des Blendkolbens 50 nach unten, so dass die Kugel 36 auf den Sitz 35 gepresst wird und eine Pumpwirkung von Druckfluid durch die Leitung 20 in den Verriegelungsdruckraum 16 stattfindet. Diese Pumpwirkung überwindet in jedem Fall den Druck des Druckfluids in der Leitung 19, so dass der Sperrbolzen 14 in Riegellage verbleibt.

Als weitere Störung wäre denkbar, dass die Schraubenfeder 15 vor dem Sperrbolzen 14 bricht. In diesem Fall wird der Sperrbolzen 14 beim Aufbau des Druckes in der Leitung 19 natürlich ebenfalls entriegelt, nur etwas schneller. Die Bewegung des Kolben sechs wird aber noch durch die vorhandene Sperrung des Lasthalteventil 24 verhindert.

Auch in diesem Fall steht im Verriegelungsdruckraum 16 der volle Systemdruck an, da ein Durchfluss durch das Druckausgleichsventil 21 nicht gehindert wird. Dagegen sind die Blenden 58 und 59 im Verhältnis zum Druckausgleichsventil 21 so eingestellt, dass in der Leitung 20 immer ein höherer Druck ansteht, der zu einem Schliessen des Sperrbolzens 14 führt.

**Bezugszeichenliste**

| | | | | | |
|---|---|---|---|---|---|
| 1 | Verriegelbarer Arbeitszylinder | 34 | Stufenbohrung | 67 | |
| 2 | Steuerungsblock | 35 | Kugelsitz | 68 | |
| 3 | Hauptleitung | 36 | Kugel | 69 | |
| 4 | Hauptleitung | 37 | Schraubenfeder | 70 | |
| 5 | Hauptventil | 38 | Gleitkolben | 71 | |
| 6 | Kolben | 39 | T-Leitung | 72 | |
| 7 | Druckraum | 40 | Ringkanal | 73 | |
| 8 | Druckraum | 41 | Ringspalt | 74 | |
| 9 | Kolbenstange | 42 | Durchflusskammer | 75 | |
| 10 | Spindel | 43 | Innenfläche | 76 | |
| 11 | Aussengewinde | 44 | | 77 | |
| 12 | Teilscheibe | 45 | | 78 | |
| 13 | Entriegelungsdruckraum | 46 | | 79 | |
| 14 | Sperrbolzen | 47 | | | |
| 15 | Schraubenfeder | 48 | | | |
| 16 | Verriegelungsdruckraum | 49 | | | |
| 17 | Wechselventil | 50 | Blendkolben | | |
| 18 | Druckregelventil | 51 | Durchgangsbohrung | | |
| 19 | Leitung | 52 | Blende | A | Längsachsen |
| 20 | Leitung | 53 | Durchlassöffnung | | |
| 21 | Druckausgleichsventil | 54 | Ringkante | | |
| 22 | Rückschlagventil | 55 | Einformung | | |
| 23 | Rückschlagventil | 56 | Blende | | |
| 24 | Lasthalteventil | 57 | Blende | | |
| 25 | Lasthalteventil | 58 | Blende | | |
| 26 | Leitung | 59 | Blende | | |
| 27 | Leitung | 60 | | | |
| 28 | Bypass | 61 | | | |
| 29 | Bypass | 62 | | | |
| 30 | Rückschlagventil | 63 | | | |
| 31 | Rückschlagventil | 64 | | | |
| 32 | Bohrung | 65 | | | |
| 33 | Einsatz | 66 | | | |

## Patentansprüche

1. Steuerungssystem umfassend einen Verriegelungsdruckraum (16), einen Entriegelungsdruckraum (13) und ein hydraulisches Element (14), welches unter dem Druck von Druckfluid in den Verriegelungsdruckraum (16) einerseits des hydraulischen Elements (14) und in einen Entriegelungsdruckraum (13) andererseits des hydraulischen Elements (14) einfährt, wobei beide Druckräume (13, 16) über je eine Leitung (19 bzw. 20) an die gleiche Hauptleitung (3, 4) angeschlossen sind,
**dadurch gekennzeichnet,**
**dass** in die Leitung (20) zu dem Verriegelungsdruckraum (16) ein Druckausgleichsventil (21) eingeschaltet ist, wobei in eine axiale Stufenbohrung (34) des Druckausgleichsventils (21) eine sich gegen eine Feder (37) abstützende Kugel (36) eingesetzt ist, der ein entsprechend geformter Kugelsitz (35) in der Stufenbohrung (34) zugeordnet ist, so dass die Kugel (36) durch die Feder (37) vom Kugelsitz (35) abgehoben ist und wobei gegen die Feder wirkend auf die Kugel (36) ein in der Stufenbohrung (34) gleitbar gelagerter Kolben (50) drückt, der mit der Hauptleitung in Verbindung steht und der ein Blendkolben ist, in dem sich eine Blende (52) befindet.

2. Steuerungssystem nach Anspruch 1, **dadurch gekennzeichnet, dass** in die Leitung (19) zum Entriegelungsdruckraum (13) ein Druckregelventil (18) eingeschaltet ist, das ein Rückströmen des Fluids aus dem Entriegelungsdruckraum (13) verhindert.

3. Steuerungssystem nach Anspruch 2, **dadurch gekennzeichnet, dass** das Druckregelventil (18) gewährleistet, dass in der Leitung (19) zum Entriegelungsdruckraum (13) bei geschlossenem Hauptventil (5) für die Hauptleitung (3, 4) immer ein niedrigerer Druck ansteht, als in der Leitung (20) zum Verriegelungsdruckraum (16).

4. Steuerungssystem nach Anspruch 2 oder 3, **dadurch gekennzeichnet, dass** das Druckregelventil (18) einstellbar ist.

5. Steuerungssystem nach wenigstens einem der Ansprüche 1 bis 4, **dadurch gekennzeichnet, dass** die Hauptleitung (3) über ein Lasthalteventil (24) zu einem weiteren Druckraum (7) führt, wobei in einem Bypass (28) dem Lasthalteventil (24) ein Rückschlagventil (30) zugeordnet ist.

6. Steuerungssystem nach Anspruch 5 in Kombination mit einem der Ansprüche 2 bis 4, **dadurch gekennzeichnet, dass** das Rückschlagventil (30) des Lasthalteventils (24) höher eingestellt ist als das Druckregelventil (18) in der Leitung zum Entriegelungsdruckraum (13).

7. Steuerungssystem nach wenigstens einem der Ansprüche 1 bis 6, **dadurch gekennzeichnet, dass** ein zweiter Druckraum (8) vorgesehen ist, dessen Hauptleitung (4) ebenfalls mit dem Hauptventil (5, 5.1) in Verbindung steht, wobei in diese Hauptleitung (4) ein weiteres Lasthalteventil (25) eingeschaltet ist.

8. Steuerungssystem nach Anspruch 7 in Kombination mit Anspruch 2, **dadurch gekennzeichnet, dass** in die Verbindung zu den Hauptleitungen (3, 4) vor dem Druckregelventil (18) zu dem Entriegelungsdruckraum (13) hin ein Wechselventil (17) eingeschaltet ist.

9. Steuerungssystem nach Anspruch 7 oder 8, **dadurch gekennzeichnet, dass** eine Steuerung jedes Lasthalteventils (24, 25) mit der Hauptleitung (3, 4) des jeweils anderen Lasthalteventils verbindbar ist.

10. Steuerungssystem nach wenigstens einem der Ansprüche 1 bis 9, **dadurch gekennzeichnet, dass** das Fluidzufuhrsystem mit einem Drei-Vier-Wege-Ventil (5.1) verbunden ist, welches einen Rückfluss des Fluids erlaubt.

11. Steuerungssystem nach wenigstens einem der Ansprüche 1 bis 10, **dadurch gekennzeichnet, dass** in zumindest eine Hauptleitung (3, 4) eine Blende (56, 57) eingeschaltet ist.

## Claims

1. Control system comprising a locking pressure space (16), an unlocking pressure space (13) and a hydraulic element (14) which moves under the pressure of pressure fluid into the locking pressure space (16) on one side of the hydraulic element (14) and into an unlocking pressure space (13) on the other side of the hydraulic element (14), both pressure spaces (13, 16) being connected to the same main line (3, 4) via in each case one line (19 and 20, respectively), **characterized in that** a pressure compensating valve (21) is connected into the line (20) to the locking pressure space (16), a ball (36) which is supported against a spring (37) being inserted into an axial stepped bore (34) of the pressure compensating valve (21), which ball (36) is assigned a correspondingly shaped ball seat (35) in the stepped bore (34), with the result that the ball (36) is raised up from the ball seat (35) by way of the spring (37), and a piston (50) which is mounted such that it can slide in the stepped bore (34) pressing on the ball (36) such that it acts counter to the spring, which piston (50) is connected to the main line and is a restricted-orifice piston, in which a restricted orifice (52) is situated.

2. Control system according to Claim 1, **characterized in that** a pressure control valve (18) is connected into the line (19) to the unlocking pressure space (13), which pressure control valve (18) prevents a return flow of the fluid out of the unlocking pressure space (13).

3. Control system according to Claim 2, **characterized in that** the pressure control valve (18) ensures that there is always a lower pressure in the line (19) to the unlocking pressure space (13) when the main valve (5) for the main line (3, 4) is closed than in the line (20) to the locking pressure space (16).

4. Control system according to Claim 2 or 3, **characterized in that** the pressure control valve (18) is adjustable.

5. Control system according to at least one of Claims 1 to 4, **characterized in that** the main line (3) leads via a load-holding valve (24) to a further pressure space (7), a check valve (30) being assigned in a bypass (28) to the load-holding valve (24).

6. Control system according to Claim 5 in combination with one of Claims 2 to 4, **characterized in that** the check valve (30) of the load-holding valve (24) is adjusted to be higher than the pressure control valve (18) in the line to the unlocking pressure space (13).

7. Control system according to at least one of Claims 1 to 6, **characterized in that** a second pressure space (8) is provided, the main line (4) of which is likewise connected to the main valve (5, 5.1), a further load-holding valve (25) being connected into the said main line (4).

8. Control system according to Claim 7 in combination with Claim 2, **characterized in that** a shuttle valve (17) is connected into the connection to the main lines (3, 4) upstream of the pressure control valve (18) towards the unlocking pressure space (13).

9. Control system according to Claim 7 or 8, **characterized in that** a controller of each load-holding valve (24, 25) can be connected to the main line (3, 4) of the respectively other load-holding valve.

10. Control system according to at least one of Claims 1 to 9, **characterized in that** the fluid feed system is connected to a 3/4-way valve (5.1) which permits a return flow of the fluid.

11. Control system according to at least one of Claims 1 to 10, **characterized in that** a restricted orifice (56, 57) is connected into at least one main line (3, 4) .

## Revendications

1. Système de commande comprenant un espace de pression de verrouillage (16), un espace de pression de déverrouillage (13) et un élément hydraulique (14), qui pénètre, sous l'effet de la pression de fluide de pression, dans l'espace de pression de verrouillage (16) de l'élément hydraulique (14) d'une part et dans un espace de pression de déverrouillage (13) de l'élément hydraulique (14) d'autre part, les deux espaces de pression (13, 16) étant raccordés à chaque fois par le biais d'une conduite (19, respectivement 20) à la même conduite principale (3, 4), **caractérisé en ce**
**qu'**une soupape d'équilibrage de la pression (21) est incorporée dans la conduite (20) allant à l'espace de pression de verrouillage (16), une bille (36) s'appuyant contre un ressort (37) étant insérée dans un alésage étagé axial (34) de la soupape d'équilibrage de la pression (21), laquelle bille est associée à un siège de bille (35) formé de manière correspondante dans l'alésage étagé (34), de telle sorte que la bille (36) soit soulevée par le ressort (37) du siège de bille (35) et un piston (50) monté de manière à pouvoir glisser dans l'alésage étagé (34) pressant contre le ressort agissant sur la bille (36), lequel piston est en liaison avec la conduite principale et est un piston à diaphragme dans lequel se trouve un diaphragme (52).

2. Système de commande selon la revendication 1, **caractérisé en ce qu'**une soupape de régulation de la pression (18) est incorporée dans la conduite (19) allant à l'espace de pression de déverrouillage (13), laquelle empêche un reflux du fluide hors de l'espace de pression de déverrouillage (13).

3. Système de commande selon la revendication 2, **caractérisé en ce que** la soupape de régulation de la pression (18) fait en sorte qu'il existe toujours, dans la conduite (19) conduisant à l'espace de pression de déverrouillage (13), lorsque la soupape principale (5) pour la conduite principale (3, 4) est fermée, une pression inférieure à la pression dans la conduite (20) conduisant à l'espace de pression de verrouillage (16) .

4. Système de commande selon la revendication 2 ou 3, **caractérisé en ce que** la soupape de régulation de la pression (18) est réglable.

5. Système de commande selon au moins l'une quelconque des revendications 1 à 4, **caractérisé en ce que** la conduite principale (3) conduit, par le biais d'une soupape de maintien de charge (24), à un espace de pression supplémentaire (7), un clapet antiretour (30) étant associé à la soupape de maintien de charge (24) dans une dérivation (28) .

6. Système de commande selon la revendication 5 en combinaison avec l'une quelconque des revendications 2 à 4, **caractérisé en ce que** le clapet antiretour (30) de la soupape de maintien de charge (24) est ajusté plus haut que la soupape de régulation de la pression (18) dans la conduite conduisant à l'espace de pression de déverrouillage (13).

7. Système de commande selon au moins l'une quelconque des revendications 1 à 6, **caractérisé en ce qu'**un deuxième espace de pression (8) est prévu, dont la conduite principale (4) est également en liaison avec la soupape principale (5, 5.1), une soupape de maintien de charge supplémentaire (25) étant incorporée dans cette conduite principale (4).

8. Système de commande selon la revendication 7 en combinaison avec la revendication 2, **caractérisé en ce qu'**une soupape d'échange (17) est incorporée dans la connexion aux conduites principales (3, 4) avant la soupape de régulation de la pression (18) conduisant à l'espace de pression de déverrouillage (13).

9. Système de commande selon la revendication 7 ou 8, **caractérisé en ce qu'**une commande de chaque soupape de maintien de charge (24, 25) peut être connectée à la conduite principale (3, 4) de l'autre soupape de maintien de charge respective.

10. Système de commande selon au moins l'une quelconque des revendications 1 à 9, **caractérisé en ce que** le système d'alimentation en fluide est connecté à une soupape à 3/4 voies (5.1) qui permet un reflux du fluide.

11. Système de commande selon au moins l'une quelconque des revendications 1 à 10, **caractérisé en ce qu'**un diaphragme (56, 57) est incorporé dans au moins une conduite principale (3, 4).
